# EUROPÄISCHE PATENTSCHRIFT

(11) **EP 3 576 947 B1**
(45) Veröffentlichungstag und Bekanntmachung des Hinweises auf die Patenterteilung: **28.07.2021**
(21) Anmeldenummer: 18711495.4
(22) Anmeldetag: 02.03.2018
(51) Int. Cl.: B33Y 70/00, B29C 64/153

(54) **MATERIAL ZUR VERARBEITUNG IM SELEKTIVEN-LASER-SINTER-VERFAHREN, DARAUS HERGESTELLTER FORMKÖRPER, SOWIE VERWENDUNG IM SLS-VERFAHREN**
MATERIAL FOR PROCESSING IN SELECTIVE LASER SINTERING METHOD, MOULDED BODY PRODUCED THEREFROM, AND USE IN SLS METHOD
MATÉRIAU DE TRAITEMENT DANS LE PROCÉDÉ DE FRITTAGE SÉLECTIF PAR LASER (FSL), CORPS MOULÉ PRODUIT À PARTIR DE CELUI-CI, ET UTILISATION DANS LE PROCÉDÉ FSL

(30) Priorität: 06.03.2017 DE 102017203586; 10.03.2017 DE 102017203962
(43) Veröffentlichungstag der Anmeldung: 11.12.2019
(73) Patentinhaber: Siemens Mobility GmbH, 81739 München (DE)
(72) Erfinder: KUNKEL, Maximilian, 91074 Herzogenaurach (DE); OCHSENKÜHN, Manfred, 92348 Berg (DE); ZEININGER, Heinrich, 90587 Obermichelbach (DE)
(86) Internationale Anmeldenummer: PCT/EP2018/055200
(87) Internationale Veröffentlichungsnummer: WO 2018/162354

(56) Entgegenhaltungen:
- DE-A1-102007 024 469
- US-A1- 2015 145 168

## Beschreibung

Die Erfindung betrifft ein Material als Ausgangsstoff für das SLS-Verfahren, das neben besonderen, geforderten Flammschutzeigenschaften gleichzeitig optimale Verarbeitbarkeit im SLS Verfahren sowie optimale mechanische Eigenschaften wie Bruchdehnung, Zugfestigkeit, Elastizität dem daraus im SLS Verfahren hergestellten Formkörper verleiht. Darüber hinaus betrifft die Erfindung einen flammwidrigen Formkörper, der im Selektiven Laser Sinterverfahren, kurz SLS-Verfahren genannt, herstellbar ist und insbesondere die Brandschutzanforderungen nach DIN 45545 erfüllt.

Das Material gemäß der Erfindung dient beispielsweise zur Herstellung eines Formkörpers, der für die Branche Mobilität geeignet ist, also einen Teil der Innenverkleidung eines Schienenfahrzeugs, Autos oder Flugzeugs zu verwenden. Dabei ist neben der reinen Flammwidrigkeit auch der Aspekt des Schutzes der Passagiere und/oder des Personals vor Rauch und/oder toxischen Gasen im Falle eines Brandes zu berücksichtigen, wie in der DIN Norm EN 45545 festgelegt.

Als SLS-Verfahren wird ein Prozess bezeichnet, bei dem Kunststoff in Pulverform, schichtweise bevorzugt vollständig aufgeschmolzen und/oder in den thermoplastischen Randbereichen angeschmolzen wird, dies insbesondere ohne Einsatz von Bindern, sondern nur durch Bestrahlen mit einem Laser, wobei nach Erstarrung ein Formkörper mit hoher Dichte entsteht.

Wie dargestellt, wird in dem Verfahren pulverförmiges Ausgangsmaterial durch einen Laser, beispielsweise einen CO₂ Laser, einen Nd:YAG Laser oder einen sonstigen Laser gemäß einem vorgegebenen Bauteilplan in einem Pulverbett aufgeschmolzen.

PAEK-basierte Materialen, die für den Verwendung in SLS-Verfahren geeignet sind, sind zum Beispiel aus US2015145168 und DE10200724469 bekannt.

Aktuell gibt es kein handelsübliches Kunststoffpulver für ein Pulverbett zur Herstellung eines flammwidrigen Formkörpers im SLS-Verfahren, das den genormten Brandschutzanforderungen, insbesondere den umfassenden Brandschutzanforderungen nach DIN oder EN 45545, genügt.

Ganz besonders fehlt auch ein Kunststoffpulver für das SLS-Verfahren, das den Brandschutzanforderungen R1 HL 3 genügt.

Bislang werden Kunststoffe, die der normativen Anforderung nach DIN EN 45545 oder DIN 60695-11-10-20 oder Vorschrift UL 94 gerecht werden, vorwiegend in konventionellen Thermoplastverarbeitungsverfahren, wie Spritzguß, Extrusion, Folienherstellung und/oder generativ im Fused Deposition Modeling, kurz FDM-Verfahren, verarbeitet.

Bestehende Kunststoffe mit optimierten Brandschutzeigenschaften wie beispielsweise das PEK-Material von EOS ("PEEK HP3"), die für das SLS Verfahren geeignet sind, zeichnen sich durch nachteilige Materialalterung während des Verfahrens aufgrund der hoher Bauraum- / Prozess- / Umgebungstemperaturen aus. Infolge dessen resultieren weitere für das Verfahren und dem hergestellten Formkörper nachteilige Eigenschaften wie:
- Nicht-Wiederverwendbarkeit des im Pulverkuchens verbleibenden Restpulvers, das auch als Altpulver bezeichnet wird,
- "Verbacken" des Pulvers, also die Bildung eines starren Pulverkuchens, die die Bauteilbefreiung des gebildeten Formkörpers erschwert,
- Nachlassende mechanische Eigenschaften der hergestellten Formkörper aufgrund zunehmender Materialalterung der früh aufgebrachten Schichten, eine Folge davon, dass die erste Schicht länger der hohen Bauraum- / Prozesstemperatur ausgesetzt ist als die zuletzt aufgebrachte.

Aufgabe der vorliegenden Erfindung ist es daher, die Nachteile des Standes der Technik zu überwinden. Insbesondere ist es Aufgabe der vorliegenden Erfindung, ein Material bereit zu stellen, welches im SLS-Verfahren verarbeitbar, hiernach als "Altpulver" erneut für den SLS Prozess einsetzbar und/oder wiederverwendbar ist, leicht aus dem Pulverkuchen und/oder vom Formkörper abgelöst werden kann, sowie bei erhöhten Bauraum-, Verfahrens- und/oder Umgebungstemperaturen alterungsbeständig und zudem flammwidrig ist und einem daraus hergestellten Formkörper gute mechanische Eigenschaften, wie Steifigkeit, Zugfestigkeit und/oder ausreichende Elastizität verleiht.

Diese Aufgabe wird durch den Gegenstand der vorliegenden Anmeldung, wie er in der Beschreibung, den Figuren und den Ansprüchen offenbart ist, gelöst.

Dementsprechend ist Gegenstand der vorliegenden Anmeldung ein Material zur Verwendung im SLS-Verfahren, einen Compound zumindest eines
- ersten teilkristallinen Kunststoffes, ausgewählt aus der Gruppe der Polyaryletherketone, -PAEK-, Polyetherketonketon -PEKK-,Polyetherketon -PEK-, Polyetheretherketon -PEEK-
   und eines
- zweiten amorphen Kunststoffes, ausgewählt aus der Gruppe Polyetherimid - PEI-, Polyethersulfon -PES-, Polyphenylensulfon -PPSU- und/oder Polysulfon -PSUumfassend,
wobei der Anteil des teilkristallinen Kunststoffes überwiegt, alle Derivate der genannten Verbindungen mit umfasst sind und im Compound sowohl der erste als auch der zweite Kunststoff ihrerseits als Mischung vorliegen können.

Außerdem ist Gegenstand der vorliegenden Erfindung ein flammwidriger Formkörper, erhältlich durch Verarbeitung des aus dem oben genannten Material, bei dem der Anteil des teilkristallinen Kunststoffes überwiegt, erhaltenen Pulvers im SLS-Verfahren, der teilkristallin ist oder teilkristalline Anteile hat. Schließlich ist Gegenstand der vorliegenden Erfindung die Verwendung des oben genannten Materials, bei dem der Anteil des teilkristallinen Kunststoffes überwiegt, nach erfolgter Pulverisierung zur Weiterverarbeitung im SLS-Verfahren.

Allgemeine Erkenntnis der Erfindung ist, dass durch Compoundieren eines teilkristallinen Kunststoffes mit einem amorphen Kunststoff, wobei der Anteil des teilkristallinen Kunststoffes überwiegt, zunächst ein Compound mit amorpher Morphologie entsteht. Nach weiteren Verarbeitungsschritten zur Pulverisierung, insbesondere durch das Trocknen, Mahlen, Sieben und/oder Verrunden, liegt ein Pulver vor, das für die Verwendung im SLS-Verfahren geeignet ist. Das so erhaltene Pulver weist eine deutlich gesteigerte Alterungsresistenz im SLS-Verfahren auf.

Der nach Verarbeitung im SLS-Verfahren erhältliche Formkörper weist einen teilkristallinen Material-Anteil auf, dieser ist in der Regel durch eine Messung mit DSC "Differential Scanning Calorimetry" problemlos über den Schmelzpunkt nachweisbar ist. Darüber hinaus weist dieser gute mechanische Eigenschaften und auch die geforderte Flammwidrigkeit auf.

Der Erfindung liegt ein Material und ein Compound zur Pulverisierung und weiteren Verarbeitung im SLS-Verfahren zugrunde, wobei der überwiegende Anteil im Compound in Form des ersten teilkristallinen Kunststoffes, vorzugsweise als PAEK, vorliegt.

Ausgehend davon, dass teilkristalline PAEK-Kunststoffe für das SLS-Verfahren zwar geeignet sind, aber bisher keine für den Bereich Mobilität ausreichenden mechanische Eigenschaften zeigen, wird gemäß der Erfindung zumindest ein gewisser Anteil amorpher, temperaturstabiler zweiter Kunststoffe zugesetzt. Die amorphen Kunststoffe für sich bieten den gewünschten intrinsischen Flammschutz, eignen sich aber grundsätzlich nicht für die Verarbeitung im SLS-Verfahren, weil deren Erweichungs- und/oder Aufschmelzungs- und/oder Erstarrungseigenschaften sich für das SLS-Verfahren, bei dem kurzfristig aufgeschmolzen wird, damit nachfolgend kurzfristig eine Erstarrung eintritt, nicht eignen.

Teilkristalline Kunststoffe wie insbesondere die hier betrachteten Polyaryletherketone PAEK hingegen benötigen hohe Prozesstemperaturen um eine Verarbeitbarkeit im SLS-Verfahren überhaupt zu ermöglichen. Aufgrund dieser Verarbeitungstemperaturen tritt eine Materialalterung ein, die deutlich negative Einflüsse auf die mechanischtechnologischen Eigenschaften des Formkörpers als auch auf das ungenutzte Prozesspulver, auch Pulverkuchen und/oder Altpulver genannt, haben.

Durch die Compoundierung der zwei Kunststoff-Komponenten, des teilkristallinen Kunststoffanteils eben aus beispielsweise Polyaryetherketon einerseits und des amorphen Kunststoffanteils andererseits, insbesondere durch Einstellung eines Mischungsverhältnisses der beiden Komponenten, bei dem der Anteil des teilkristallinen Kunststoffes überwiegt, also mehr als 50 Gewichts% ausmacht, können die mechanischen Eigenschaften wie Elastizität, Bruchdehnung und Zugfestigkeit so kombiniert werden, dass ein optimales Eigenschaftsprofil für die jeweilige Anwendung resultiert.

Dies ist umso erstaunlicher, als sogar behauptet werden kann, dass mit Blick auf das SLS-Verfahren die Anforderungen
1)Brandschutz und mechanische Belastbarkeit
2)mechanische Eigenschaften und Prozesstemperatur,
3)Prozesstemperatur und Recycelbarkeit des Restpulvers bisher konfliktionär sind.

Die Anforderungen an eine hohe Temperaturbeständigkeit und niedrige Verarbeitungstemperatur sowie die hohen Flammschutzeigenschaften für Kunststoffe für Schienenfahrzeuge und/oder guten mechanischen Eigenschaften können beispielsweise mit einem Compound aus den Kunststoffen PEKK6003, insbesondere aus der 6000er Serie der Firma Arkema, und PEI 1010, beispielsweise von der Firma Sabic, insbesondere aus der 1000 er Serie der Firma Sabic, erhalten werden.

Das PEKK beispielsweise der oben genannten 6000er-Serie, kristallisiert langsam und kann sowohl im amorphen Zustand wie im teilkristallinen Zustand verarbeitet werden. Bei schneller Temperaturabkühlung liegt beispielsweise PEKK 6003 in amorpher Morphologie vor. PEKK 6003 ist intrinsisch flammgeschützt und hat die niedrigsten Verarbeitungstemperaturen innerhalb der PAEK Gruppe umfassend insbesondere PEKK, PEK, PEEK, PEEKEK und deren Derivate, sowie beliebige Mischungen und/oder Blends der vorgenannten Verbindungen.

Das amorphe PEI hat einen höheren Tg als PAEK und verfügt über höhere mechanische Kennwerte, wie E-Modul oder Zugfestigkeit als z.B. PEKK 6000, die auch auf das Blend übertragen werden. Mit PEI werden auch die hohen Anforderungen an den Flammschutz erfüllt.

Nach einer Ausführungsform umfasst ein Compound PEKK6003 und PEI 1010, mit einem Mischungsverhältnis PEKK > PEI. Dieser kann, wie die PEKK-Komponente an sich, sowohl in amorpher als auch in teilkristalliner Morphologie vorliegen. Darüber hinaus steigt die thermische Formbeständigkeit des damit hergestellten Formkörpers durch die Beimischung von PEI mit einem höheren Tg, also Glasübergangstemperatur, an.

In den möglichen Compounds des Systems PEKK-PEI werden bezüglich der mechanischen Eigenschaften, wie insbesondere der Steifigkeit, messbar durch das E-Modul, und/oder der Zugfestigkeit aus beiden Komponenten die jeweils höheren Werte erreicht, bei der Bruchdehnung stellt sich der Mittelwert aus beiden Komponenten ein. Dies ist durch die in der nachfolgenden Tabelle 1 gezeigten Messungen nachvollziehbar.

**Tabelle 1:**

| | | PEKK | PEI | PEKK:PEI |
|---|---|---|---|---|
| | | z.B. Kepstan 6003 | z.B. Ultem 1010 | Mischung 51:49 Gew. % |
| E-Modul | MPa | 1977 | 1874 | 1981 |
| Zugfestigkeit | MPa | 97 | 105 | 105 |
| nominelle Bruchdehnung | % | 164 | 28,3 | 58 |

Die Werte wurden an "small tensile bars" nur zu Vergleichszwecken gemessen. Daher ist die hier gezeigte Tabelle nicht mit Datenblattwerten vergleichbar.

Desweiteren wird durch die Compoundierung erreicht, dass die Glasübergangstemperatur des reinen PEKK deutlich angehoben wird, was zu einem deutlich verbesserten Eigenschaftsprofil des daraus hergestellten Formkörpers bei höheren Temperaturen führt, d.h. gegenüber reinem PEKK ergibt sich eine um ca. 20K erhöhte Formbeständigkeit.

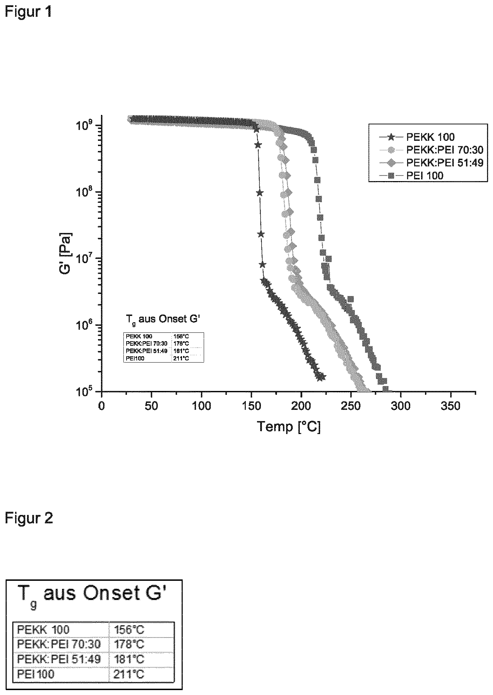

Gezeigt wird in Figur 1 die Graphik einer DMA Messung der mechanische Schubmodul über die Temperatur. Reines PEKK zeigt einen deutlichen Einbruch bei ca. 156°C, reines PEI bei ca. 220, und die Mischungen 70:30 zwischen 178 und 51:49 bei 181°C. Weiterhin sind in Figur 2 die Glasübergangstemperaturen, gemessen aus der DMA, gezeigt.

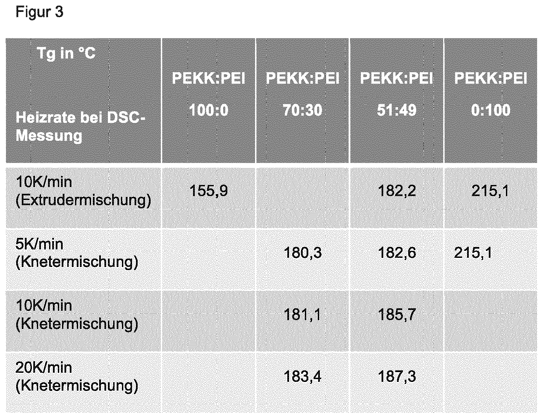

In der in Figur 3 gezeigten Tabelle werden nochmals explizit die Glasübergangstemperaturen aus den DSC Messungen dargestellt.

Dadurch, dass beide Komponenten generell eine intrinsische Flammwidrigkeit besitzen, ist auch der Compound in hohem Maße intrinsisch flammwidrig.

Erste Untersuchungen haben zudem ergeben, dass das Material im SLS-Verfahren deutlich unter der Schmelztemperatur der teilkristallinen Komponente, die bei PEKK, beispielsweise der oben genannten 6000 Serie, bei 300-305 °C liegt, noch verarbeitbar ist. Üblicherweise liegen die Bauraumtemperaturen von teilkristallinen Materialien nur wenige, also beispielsweise ca. 2°C -5 °C, unter dem Schmelzpunkt. Über die neue Morphologie der Mischung können hier sogar Bauraumtemperaturen von unter 280°C bis unter 260°C erreicht werden.

Dies wiederum führt zu einer deutlich reduzierten Alterung des SLS-Edukt-Pulvers während der langen Bauzeit und damit zu einer deutlich höheren Wiederverwertbarkeit des Altpulvers.

Es ist davon auszugehen, dass "Altpulver" gemäß der vorliegenden Erfindung teilweise sogar die Eigenschaftsprofile im Bereich des Neupulvers, also des noch nicht im SLS-Verfahren erhitzten und bestrahlten Pulvers erreichen.

Der fertig im SLS-Verfahren einsetzbare Compound aus den zumindest zwei oben genannten Kunststoffen ist beispielsweise aus den jeweiligen Edukt-Polymeren in Granulatform durch Compoundieren - wiederum beispielsweise - in schmelzflüssiger Phase als Compound erhältlich. In Tests hat sich herausgestellt, dass zumindest in einigen beispielhaft hergestellten Compounds keine teilkristalline Phase des Polyaryletherketons mehr vorliegt, sondern der Compound eine amorphe Morphologie zeigt.

Es wird davon ausgegangen, dass sich die Teilkristallinität erst wieder beim Mahlen und/oder Verrunden zur Herstellung des verarbeitbaren Pulvers und/oder erst bei der Verarbeitung des Compounds als Pulver im SLS-Verfahren aufgrund der Temperatur-/Zeit-Einwirkung wieder neu ausbildet.

Die Pulverkorngrößen des zur Verarbeitung im SLS-Verfahren aus dem Compound hergestellten Pulvers liegen in dem für das SLS-Verfahren üblichen Bereich von kleiner 100µm, insbesondere im Bereich von 30µm bis 80 µm, insbesondere um die 50µm. Besonders geeignet sind Pulverformen, die eine gewisse Fließfähigkeit zeigen, damit sie im Pulverbett, beispielsweise mit einer Rakel, besser verarbeitbar sind. Dazu liegen gemäß einer vorteilhaften Ausführungsform der Erfindung die Pulverkörner in abgerundeter Form vor.

In dem SLS-geeigneten Compound aus teilkristallinem und amorphem Kunststoff liegen die beiden Kunststoffe in einer Gewichtskonzentration vor, wobei immer der teilkristalline Kunststoff überwiegend enthalten ist. Als bevorzugt geeignetes Mischungsverhältnis hat sich der Bereich zwischen teilkristallin zu amorph wie ungefähr 80 zu 20 Gew% herausgestellt. Insbesondere ist das Mischungsverhältnis 70 Gew% zu 30 Gew% bis 60 Gew% zu 40 Gew% und ein nahezu hälftiges Mischungsverhältnis 51 Gew% des teilkristallinen zu 49 Gew% des amorphen Kunststoffes, alle Angaben in Gewichtsprozent, vorteilhaft. Von der Erfindung sind natürlich davon abweichende Mischungsverhältnisse auch umfasst.

Die Dichte der zur Herstellung des Compounds eingesetzten Edukt-Polymere liegt vorzugsweise im Bereich von 1 g/cm³ bis 2g/cm³ insbesondere im Bereich von 1 g/cm³ bis 1,5 g/cm³, wobei beispielsweise bei einem PEKK-PEI Compound, bei dem die Dichte beider Kunststoff-Komponenten 1,27 g/cm³ beträgt, die Volumenprozente den Gewichtsprozenten entsprechen.

Folgende Mischungen, die in der nachfolgenden Tabelle 2 aufgeführt sind, wurden beispielsweise zur Compoundierung ausgetestet:

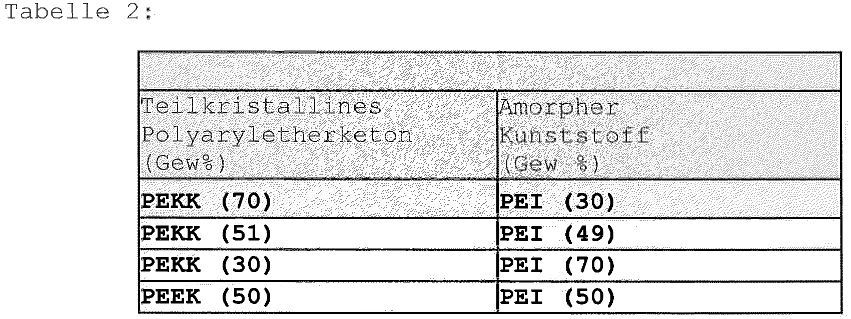

Compounds, in denen der Anteil an zweitem, amorphem Kunststoff überwiegt, haben sich dabei als weniger gut für das SLS-Verfahren geeignet herausgestellt.

Im Folgenden wird die Erfindung noch anhand weiterer Messungen, die das Schmelz- und Erstarrungsverhalten beispielhafter Ausführungsformen der Compounds und/oder daraus hergestellter Formkörper im Vergleich zu den Edukt-Polymeren in Reinform, zeigt, näher erläutert. Die Compounds können auch in beliebigen anderen Mischungsverhältnissen im Sinne der Erfindung vorliegen. Die Temperaturen der Schmelzpunkte und Kristallisationspunkte sind in °C angegeben.

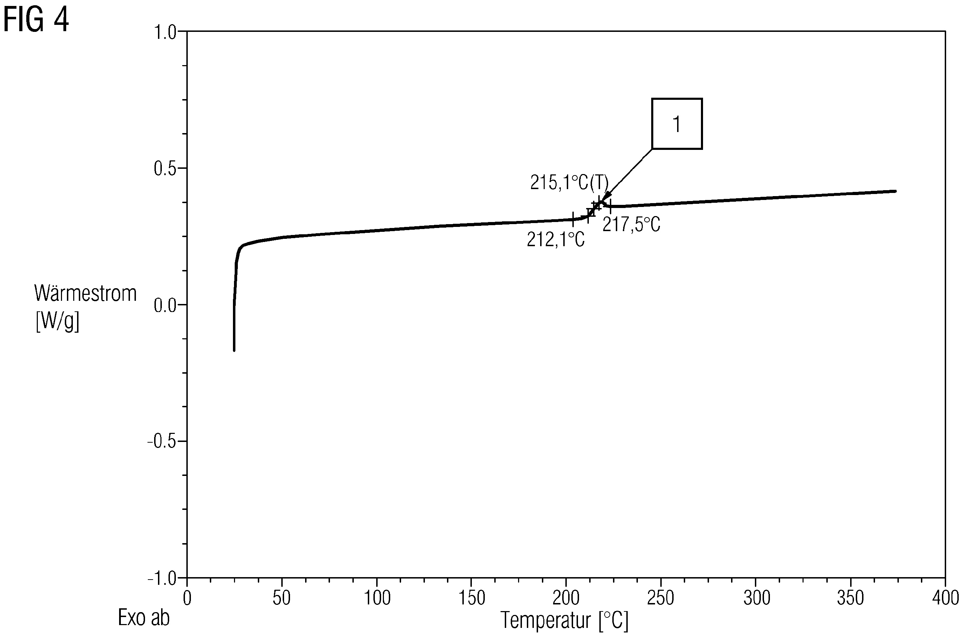

Figur 4 zeigt eine DSC Messung eines handelsüblichen PEI unter einer Aufheizrate von 10K/min.

Bei der in Figur 4 gezeigten Graphik einer DSC Messung wird der Wärmestrom in Watt pro Gramm (W/g) gegen die Temperatur in °C Celsius aufgetragen.

Zu erkennen ist in Figur 4 die Glasübergangstemperatur 1 zwischen 212 und 217 °C. Da es sich um amorphes Material handelt findet man keinen Schmelzpunkt im Spektrum und folglich lässt sich auch keine Schmelzenthalpie, bekannt als die Fläche unter dem Schmelzpeak im DSC-Spektrum, berechnen.

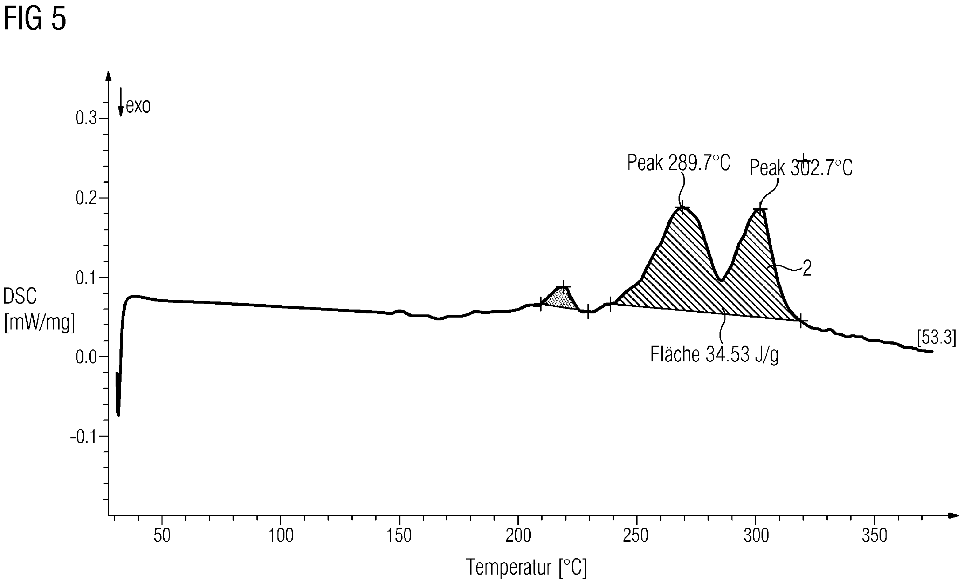

Figur 5 zeigt eine DSC-Messung einer handelsüblichen teilkristallinen Komponente: ein Polyetherketonketon, PEKK 6003. Unter der Heizrate von 10K/min erkennt man deutlich den Schmelz-Doppelpeak 2 mit einer klar bestimmbaren Fläche 2, aus der die Schmelz-Enthalpie berechenbar ist. Nur bei polymeren Stoffen, die teilkristallin vorliegen, kann man die Schmelzenthalpie so mittels DSC berechnen. Die Teilkristallinität dieser handelsüblichen Verbindung liegt im Bereich zwischen 20 und 30%, insbesondere zwischen 25 % und 30%. Der Hersteller gibt eine Teilkristallinität von ca. 27% an, die mit der gemäß Figur 5 vorliegenden Messung insofern bestätigt werden kann.

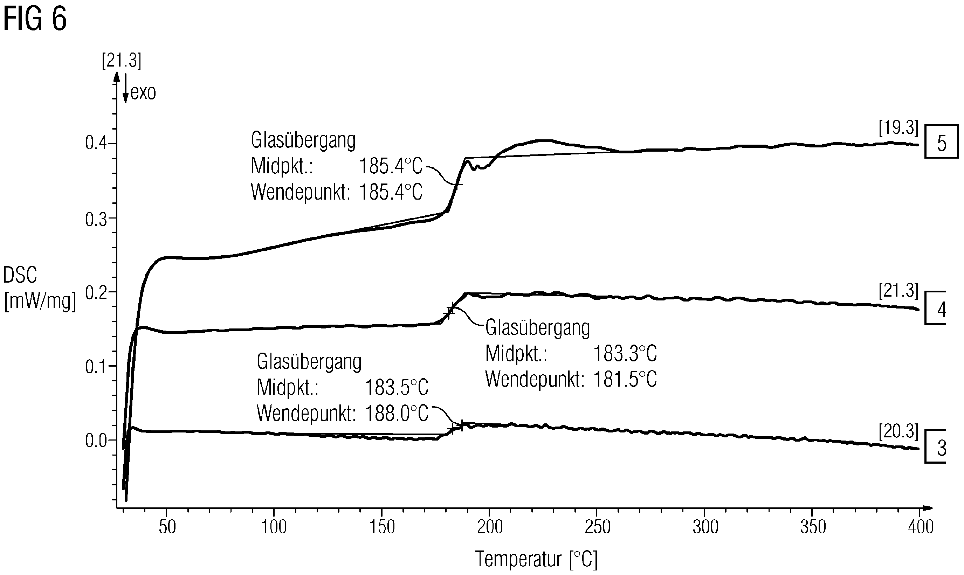

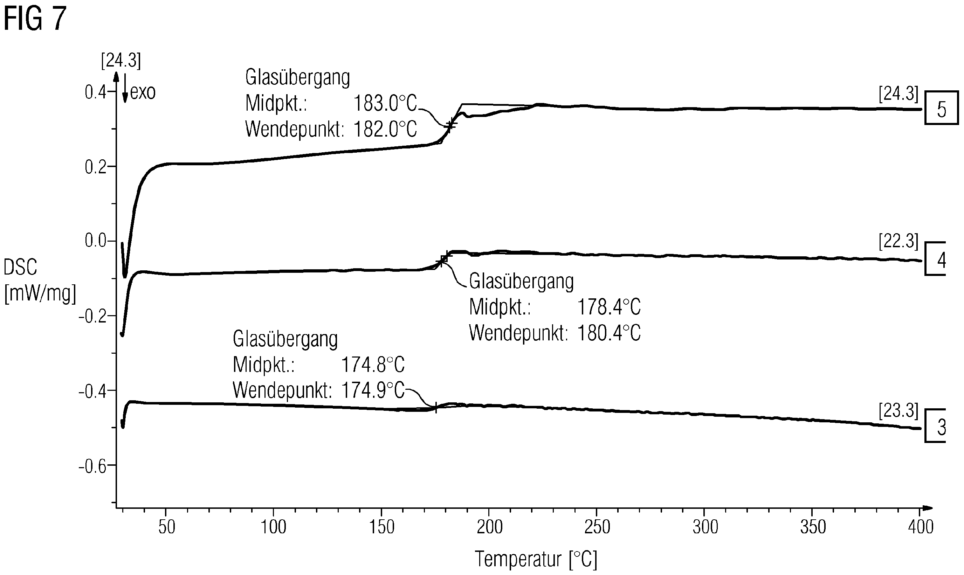

Die Figuren 6 und 7 zeigen die DSC Spektren der Compounds aus PEKK und PEI an. Figur 6 zeigt einen Compound aus 51 % PEKK und 49% PEI. Zu erkennen ist wie in Figur 4 lediglich eine Glasübergangstemperatur, aber kein Schmelzpunkt und auch kein Schmelzpeak mit einer berechenbaren Fläche unter dem Peak. Daher liegt der hier vermessene Compound, aus dem das im SLS-Verfahren verarbeitbare Material erhalten wird, amorph vor.

Gezeigt sind unterschiedliche Heizraten ganz unten die Graphik 3, die den Verlauf bei einer Heizrate von 5 K/min zeigt, darüber die Graphik 4, die den Verlauf bei einer Heizrate von 10K/min zeigt und oben die Graphik 5, die den Verlauf bei einer Heizrate von 20K/min zeigt. In allen drei Fällen ist lediglich eine Glasübergangstemperatur zu erkennen, kein Schmelzpunkt, so dass das Compound amorph, ohne teilkristalline Anteile vorliegt.

Figur 7 zeigt die gleichen Messungen mit den Graphiken 3,4 und 5, die wieder die oben genannten Heizraten darstellen. Der Compound, der hier vermessen wurde hat allerdings einen Anteil an 70% PEKK und 30% PEI. Das Ergebnis ist wieder das gleiche, nach der Compoundierung ist kein Schmelzpeak erkennbar und deshalb auch kein teilkristalliner Anteil nachweisbar. Das Compound liegt ebenfalls, wie das in Figur 6 vermessene, amorph vor.

Zur Herstellung des Formkörpers wurden Pulver, die aus den beiden in Figur 6 und 7 vermessenen Compounds hergestellt wurden, im SLS-Verfahren verarbeitet. Anschließend wurden die Formkörper auch im DSC Verfahren vermessen.

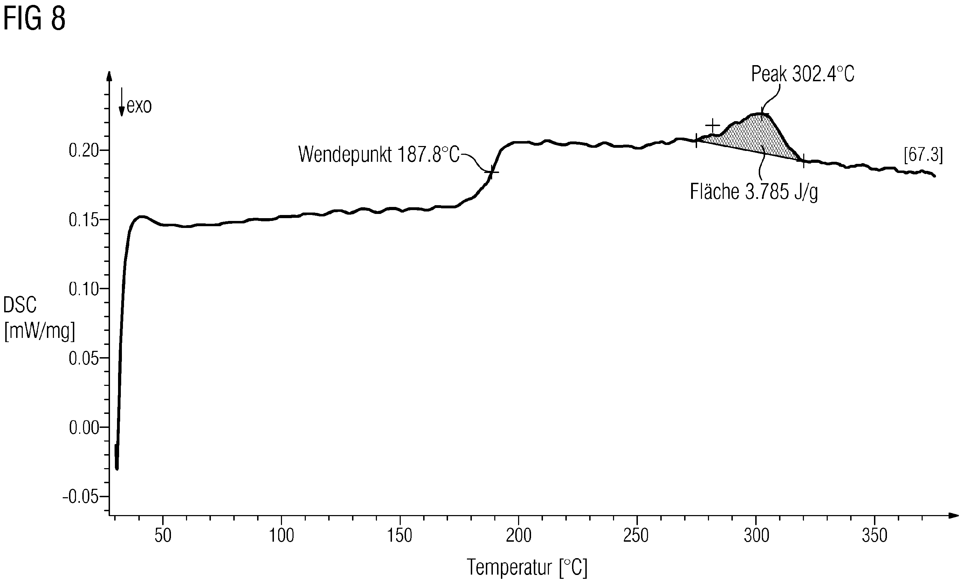

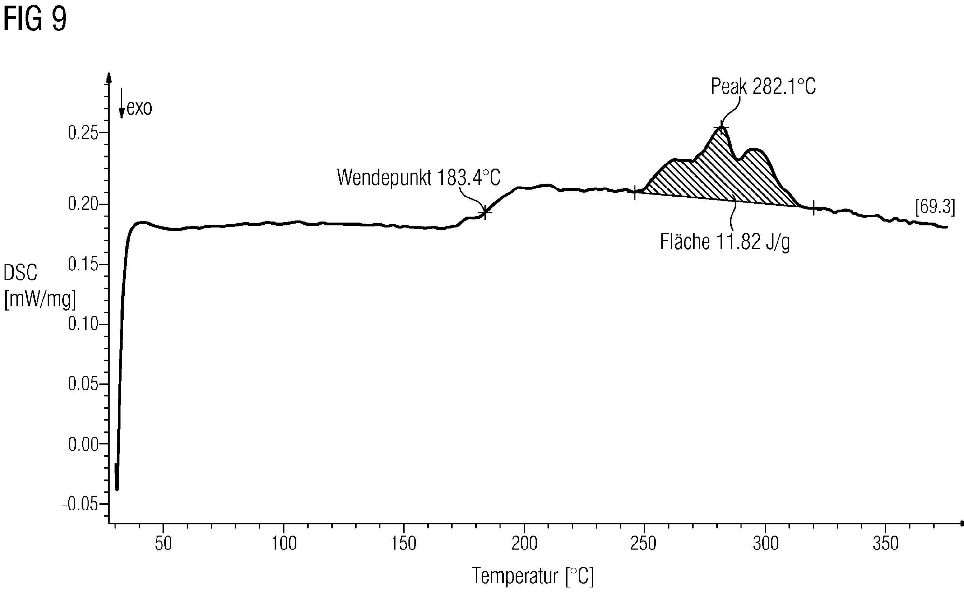

Das Ergebnis ist in den Figuren 8 und 9 zu sehen.
Figur 8 zeigt ein Formteil, erhalten nach Compoundierung eines Compounds aus 51 % PEKK und 49% PEI, Verarbeitung des Compounds zu einem Pulver, mit dem mittels SLS-Verfahren ein Formkörper hergestellt wurde.

In Figur 8 ist zu erkennen, dass im Formkörper teilkristalline Anteile vorliegen. Es ist ein klarer Schmelzpeak erkennbar, bei 302,4 °C, der dem PEKK zuzuordnen ist. Durch Berechnung der Fläche unter dem Schmelzpeak kann die Schmelzenthalpie bestimmt werden, sie beträgt in dem Fall 3,8 J/g.

In Figur 9 ist die gleiche Messung wie aus Figur 8 bekannt, mit einem Compound und einem daraus im SLS-Verfahren hergestellten Formkörper aus 70 % PEKK und 30 % PEI dargestellt. Wieder ist klar ein Schmelzpeak erkennbar und durch Berechnung der darunter liegenden Fläche kann eine Schmelzenthalpie von ca. 11,8 J/g errechnet werden.

Zusammenfassend kann aus den Messungen die Schlussfolgerung gezogen werden, dass im Formkörper teilkristalline Anteile ab einem Mischungsverhältnis von PEKK in teilkristallinem Zustand zu PEI in amorphem Zustand wie 51 zu 49 festgestellt werden.

In Bezug auf die Schmelzenthalpie zeigen Versuche, dass, je höher die Schmelzenthalpie des Compounds desto besser die Verarbeitbarkeit im SLS-Verfahren. Generell konnte festgestellt werden, dass ein Compound mit einer Schmelzenthalpie größer gleich 3 J/g sich besser zur Verarbeitung im SLS-Verfahren eignet.

Zur Testung der mechanischen Eigenschaften wurden beispielhafte Blends noch verschiedener Tests nach DIN EN ISO 527-1/-2 in Form von small tensile bars unterworfen. Dabei wurden folgende Messergebnisse erhalten:
Messung mit "Zwick Z2.5";
"2.0kN transducer"; "lOmm/min";
Unter "Messung mit Zwick Z2.5" wird eine Messung mit einer Messmaschine der entsprechenden Typenbezeichnung der dafür unter Fachleuten bekannten Fa. Zwick verstanden; wobei mit "2.0kN transducer" ein Kraftaufnehmer von 2,0 kNewton bezeichnet wird und "10mm/min" die Abzugsgeschwindigkeit und/oder die Verfahrgeschwindigkeit in mm/min in Anlehnung an annähernd DIN EN ISO 527-1/-2 ist, wobei wiederum die so genannten "small tensile bars" Zugprüfkörper bezeichnen, die eine Größe von 4x1.5mm² haben. Die Größe der Zugprüfkörper entspricht zwar nicht einer Norm, aber hier wird ja nur der relative Vergleich gemessen.

Vorbehandlung der Probekörper:
Trocknen bei 120°C für 8 Stunden, danach Tempern für mindestens 96 Stunden bei 23°C/50r.F.

Bei dem Material geht es nicht nur um Flammschutz, sondern auch um mechanische-technische Eigenschaften, die durch das Material gemäß der Erfindung besonders gut sind, wie die nachstehenden Messungen gut zeigen.

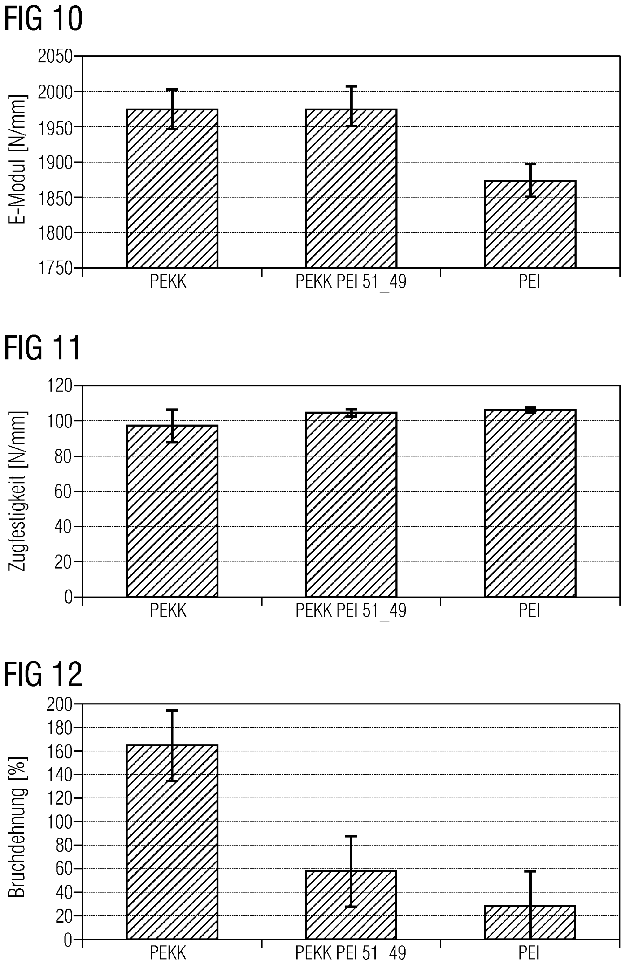

In den Figuren 10 bis 12 werden die diesbezüglichen Grafiken, die die Ergebnisse der Messung des E-Moduls, die Messung der Zugfestigkeit und die Messung der nominalen Bruchdehnung wiedergeben, gezeigt.

Ebenfalls wurde die Wiederverwendbarkeit als auch die Löslichkeit des Pulvers vom Pulverkuchen begutachtet. Es zeigte sich, dass das im Prozess eingesetzte Pulver sich zur Wiederverwendbarkeit eignet und keine signifikante Alterung eingetreten ist.
Ebenfalls war das Freilegen des Formkörpers aus dem Pulverkuchen nach der Durchführung des SLS-Verfahrens unproblematisch. Es findet kein "Verbacken" des Pulvers statt.

Die Compounds sind alle im SLS-Verfahren zu Formkörpern mit erheblichem Anwendungspotential verarbeitbar. Anwendungen sind beispielsweise in Fahrzeugen, Schienenfahrzeugen, Verkleidungen im Innenraum und/oder Gehäuse und/oder Gehäuseteile verschiedenster Produkte, allgemein Teile zur äußeren Gestaltung eines Produktes.

Die Messungen und Testergebnisse zeigen, dass die Compounds grundsätzlich für die Verarbeitung im SLS-Verfahren geeignet sind. Aus den Daten ist jedoch auch ersichtlich, dass für den SLS-Prozess nicht alle Mischungen gleiche Eigenschaften zeigen und insbesondere, dass höhere Gehalte an teilkristallinem Kunststoff vorteilhaft sind, da diese Compounds eine höhere Schmelzenthalpie und/oder einen höheren Kristallisationsgrad haben was für die im SLS-Verfahren hergestellten Formkörper vorteilhaft ist.

Im Folgenden wird anhand einer Compoundierung ein Beispiel zur Herstellung einer Ausführungsform eines beispielhaften Compounds gemäß der Erfindung näher erläutert:
Bei der Mischung der Kunststoffe, also der Edukt-Polymere, werden diese beispielsweise wie im Handel erhältlich eingesetzt. Über zwei oder mehr separate Dosierwagen werden diese Materialien in den Trichter über der Einfüllzone eines Zweischneckenextruders/-kneters gefüllt. Das darunter liegende Schneckenpaar fördert das Material im Zylinder zur Austragszone. Die Temperatur der Zonen liegt einheitlich bei allen Materialmischungen bei ca. 320-330°C. Die Schnecken bestehen aus einzelnen steckbaren Elementen und können der jeweiligen Compoundieraufgabe angepasst werden. In diesem Falle werden über Knetblöcke die Materialien aufgeschmolzen und die Mischung homogenisiert und über Mischelemente die Dispergierung verbessert.

Grundsätzlich könnten die Materialien als Granulat und/oder als Pulver mit weiteren zusätzlichen Additiva gemischt werden. Die Zu-Dosierung zum Zweischneckenextruder kann als Trockenmischung, über einzelne Wagen und/oder an unterschiedlichen Stellen erfolgen.

Der Austrag erfolgt als geschmolzener Strang durch eine Düse und wird anschließend im Wasserbad schnell abgekühlt und dann in einem Schneidgranulator zu Granulat verarbeitet, welches zur weiteren Verarbeitung verwendet wird. Dabei variieren je nach Austragsvolumen die Extrudergröße und/oder die Anzahl der Stränge.

Der so erhaltene Compound wird in getrockneter Granulatform für den Mahlprozess bereitgestellt. Standardmäßig wechseln sich verschiedene Mahlverfahren, wie beispielsweise Hammer-, Roller-, Rod-, Ball-, Attrition-, Grinder- Milling und/oder eine Direktverdüsung der gemischten Polymerschmelze mit anschließenden Separationen und/oder Absiebungen ab. Eine vorteilhafte Vermahlung findet unter kryogener Umgebung statt.

Die Vermahlung der vorliegenden Materialsysteme führt zu splittrigen und faserigen Partikeln so dass für eine vorteilhafte Ausführungsform zur besseren Verarbeitung im SLS-Prozess eine Verrundung der Partikel in der Mahltrommel und/oder in einem separaten Nachbearbeitungsschritt durchgeführt wird.

Die mit den oben genannten Pulvern als Ausgangsstoffen im SLS-Verfahren hergestellten Formkörper sind ohne Zugabe weiterer Additiva flammwidrig, insbesondere intrinsisch flammwidrig.

Durch die Erfindung wird erstmals ein Material als Ausgangsstoff zur Verarbeitung mittels SLS-Verfahren angegeben, das hervorragende Eigenschaften in der Prozessierbarkeit im SLS-Verfahren sowie eine hohe Flammwidrigkeit bei gleichzeitig optimalen mechanisch-technischen Eigenschaften des hieraus resultierenden Formkörpers zeigt, wie sie beispielsweise zur Verwendung in Fahrzeugen, beispielsweise in öffentlichen Verkehrsmittel und/oder im Flugverkehr und/oder Gebäuden erforderlich sind.

## Patentansprüche

1. Compound zur Verwendung im SLS-Verfahren, erhältlich durch Compoundieren eines Materials aus
zumindest einem
- ersten teilkristallinen Kunststoff, ausgewählt aus der Gruppe der Polyaryletherketone, -PAEK-, Polyetherketonketon -PEKK-, Polyetherketon -PEK-, Polyetheretherketon -PEEK-
und einem
- zweiten amorphen Kunststoff, ausgewählt aus der Gruppe Polyetherimid - PEI-, Polyethersulfon -PES-, Polyphenylensulfon -PPSU- und/oder Polysulfon -PSU-, wobei
- der Anteil an erstem, teilkristallinem Kunststoff vor der Compoundierung überwiegt
- alle Derivate der genannten Verbindungen mit umfasst sind und im Compound sowohl der erste als auch der zweite Kunststoff ihrerseits als Mischung vorliegen können und
- der Compound vor der Pulverisierung in amorpher Morphologie vorliegt.

2. Compound nach Anspruch 1, wobei der Compound nach der Pulverisierung zumindest zum Teil in teilkristalliner Morphologie vorliegt.

3. Compound nach einem der vorstehenden Ansprüche, wobei die Morphologie des Compounds durch definierte Temperatur- und Zeitexposition von amorph zu teilkristallin änderbar ist.

4. Compound nach einem der vorstehenden Ansprüche, wobei der Compound nach der Pulverisierung in Pulverform, die sich zur Verarbeitung mittels SLS-Verfahren eignet, vorliegt.

5. Compound nach einem der vorstehenden Ansprüche, wobei im Compound mehr als 50 Gew% teilkristallines Polyaryletherketon, vorliegt.

6. Flammwidriger Formkörper, erhältlich durch Verarbeitung eines Pulvers aus einer Compoundierung mit mindestens Gew50% teilkristallinem Kunststoff nach einem der vorstehenden Ansprüche 1 bis 5 im SLS-Verfahren.

7. Formkörper nach Anspruch 6, der Teil einer Innen- oder Außenverkleidung eines Fahrzeugs, Schiffs und/oder Flugzeugs ist.

8. Formkörper nach einem der Ansprüche 6 oder 7, der Teil eines Gebäudes, eines beliebigen Produktes und/oder eines Gehäuses ist.

9. Verwendung eines Compounds nach einem der Ansprüche 1 bis 5, bei dem das Material vor der Compoundierung zu mehr als 50 Gew% teilkristallin vorliegt, zur Weiterverarbeitung im SLS-Verfahren.

## Claims

1. Compound for use in the SLS process, obtainable by compounding a material composed of
at least a
- first semicrystalline plastic selected from the group of the polyaryletherketones, -PAEK-, polyetherketoneketone -PEKK-, polyetherketone -PEK-, polyetheretherketone -PEEK-
and a
- second amorphous plastic selected from the group of polyetherimide -PEI-, polyethersulfone -PES-, polyphenylenesulfone -PPSU- and/or polysulfone -PSU-, where
- the proportion of first semicrystalline plastic is predominant before the compounding,
- all derivatives of the compounds mentioned are included, and both the first plastic and the second plastic may themselves be present as a mixture in the compound, and
- the compound is in amorphous morphology before the pulverization.

2. Compound according to Claim 1, wherein the compound is at least partly in semicrystalline morphology after the pulverization.

3. Compound according to either of the preceding claims, wherein the morphology of the compound is alterable from amorphous to semicrystalline by defined exposure to temperature and time.

4. Compound according to any of the preceding claims, wherein the compound after pulverization is in powder form suitable for processing by means of SLS methods.

5. Compound according to any of the preceding claims, wherein the compound includes more than 50% by weight of semicrystalline polyaryletherketone.

6. Flame-retardant shaped body obtainable by processing a powder from a compounding operation with at least 50% by weight of semicrystalline plastic according to any of the preceding Claims 1 to 5 by the SLS method.

7. Shaped body according to Claim 6, which is part of an interior trim or outer cladding of a vehicle, ship and/or aircraft.

8. Shaped body according to either of Claims 6 and 7, which is part of a building, any product and/or a housing.

9. Use of a compound according to any of Claims 1 to 5, in which more than 50% by weight of the material is in semicrystalline form before the compounding, for further processing by the SLS method.

## Revendications

1. Compound destiné à être utilisé dans un procédé FSL, pouvant être obtenu par compoundage d'un matériau constitué d'au moins une
- première matière plastique semi-cristalline, sélectionnée parmi le groupe des polyaryléthercétones (PAEK), le polyéthercétonecétone (PEKK), le polyéthercétone (PEK), et le polyétheréthercétone (PEEK),
et d'une
- seconde matière plastique amorphe, sélectionnée dans le groupe comprenant le polyétherimide (PEI), le polyéthersulfone (PES), le polyphénylsulfone (PPSU) et/ou le polysulfone (PSU),
dans lequel
- la proportion de première matière plastique semi-cristalline est prépondérante avant le compoundage,
- tous les dérivés des composés cités sont englobés dans ceux-ci et aussi bien la première que la seconde matières plastiques peuvent être présentes elles-mêmes sous forme de mélange dans le compound, et
- le compound est dans une morphologie amorphe avant la pulvérisation.

2. Compound selon la revendication 1, dans lequel le compound, après la pulvérisation, est au moins en partie dans une morphologie semi-cristalline.

3. Compound selon l'une des revendications précédentes, dans lequel la morphologie du compound est modifiable d'une morphologie amorphe à semi-cristalline par une exposition à une température définie, dans une durée définie.

4. Compound selon l'une des revendications précédentes, dans lequel le compound, après la pulvérisation, est sous forme d'une poudre qui est appropriée à un traitement par un procédé de FSL.

5. Compound selon l'une des revendications précédentes, dans lequel il y a plus de 50 % en poids de polyaryléthercétone semi-cristallin dans le compound.

6. Corps moulé ignifuge, pouvant être obtenu par traitement d'une poudre obtenue à partir d'un compoundage avec au moins 50 % en poids de matière plastique semi-cristalline selon l'une des revendications 1 à 5 dans un procédé FLS.

7. Corps moulé selon la revendication 6, qui est une partie d'un revêtement intérieur ou extérieur d'un véhicule, d'un navire et/ou d'un aéronef.

8. Corps moulé selon l'une des revendications 6 ou 7, qui est une partie d'un bâtiment, d'un produit quelconque et/ou d'un boîtier.

9. Utilisation d'un compound selon l'une des revendications 1 à 5, dans lequel le matériau avant le compoundage est à plus de 50 % en poids sous une forme semi-cristalline, pour une utilisation ultérieure dans un procédé FLS.
